# EUROPEAN PATENT SPECIFICATION

(11) **EP 1 287 743 B1**
(45) Date of publication and mention of the grant of the patent: **30.09.2009**
(21) Application number: 02256032.0
(22) Date of filing: 30.08.2002
(51) Int. Cl.: A21D 6/00, A21D 8/02, A21D 13/00

(54) **Glazed baking products**
Glasierte Backwaren
Produits de cuisson glacés

(30) Priority: 31.08.2001 GB 0121194
(43) Date of publication of application: 05.03.2003
(73) Proprietor: Bakehouse Ltd., Bagshot, Surrey GU19 5HD (GB)
(72) Inventor: Smail, Christopher John Cobham, Wardour, Tisbury, Wiltshire SP3 6SE (GB); Honey, Laura Nicole, Camberley, Surrey GU15 3BD, (GB)
(74) Representative: Leeming, John Gerard

(56) References cited:
- EP-A- 0 477 832
- EP-A- 1 002 466
- WO-A-01/19203
- WO-A-94/00996
- WO-A-98/30104
- WO-A-98/30105
- DE-A- 4 320 050
- US-A- 4 645 674
- FOG-PETERSEN M S ET AL: "FREEZE-AND BAKE-STABLE GLAZING FOR CONFECTIONERY PRODUCTS CHARACTERIZED BY DIFFERENTIAL SCANNING CALORIMETRY" ZEITSCHRIFT FUER LEBENSMITTEL-UNTERSUCHUNG UND -FORSCHUNG. A, EUROPEAN FOOD RESEARCH AND TECHNOLOGY, SPRINGER, HEIDELBERG, DE, vol. 210, no. 3, 1999, pages 114-118, XP000965725 ISSN: 1431-4630
- DATABASE WPI Section Ch, Week 200150 Derwent Publications Ltd., London, GB; Class D13, AN 2001-459293 XP002256546 & HU 219 200 A (SZABO K), 28 April 2001 (2001-04-28)
- DATABASE WPI Section Ch, Week 198513 Derwent Publications Ltd., London, GB; Class D13, AN 1985-078014 XP002256547 & JP 60 030636 A (FUJI OIL CO LTD), 16 February 1985 (1985-02-16)

## Description

The present invention relates to the application of glazes onto foodstuffs to be baked, in particular but not exclusively pastries, breads, cakes and biscuits, as well as savoury products, such as savoury croissants or savoury puff pastry products.

A problem which has been encountered in the formation of baked goods is that, after baking, many pastry doughs have a dull, flaky or mottled appearance.
Traditionally, this problem has been overcome by applying a glaze, such as thinned apricot jam, to the product after said product has been baked. However, if the glaze is not applied equally and consistently to the surface of the baked goods then this may have a detrimental effect upon their appearance. This problem has become of particular importance with the emergence of bake-off foodstuffs. Bake-off foodstuffs involve the manufacture of an unbaked dough mixture which is generally baked at the point of sale, often by unskilled personnel. In certain situations, it may also be impractical to apply the glaze due to the space needed for this operation Since the glaze is responsible for the shiny appearance of the baked goods, it is important to ensure that it is correctly applied. Clearly an incorrect application of the glaze will result in a detrimental effect upon the aesthetic properties of the final baked goods.

Eur Food Res Technol (1999) 210:114-118 describes a freeze-and bake-stable glazing for pastry which use starches and carrageenans as thickening agents in combination with sugar alcohols and sodium tripolyphosphate. This glaze is said to show no crystallisation problems during freezing.

DE 4320050 concerns a process for producing frozen dough pieces and bakery products which involves coating them with starch and wherein the products have an increased hydrocolloid content.

WO 98/30104 is concerned with shaped unbaked dough products which are coated with a glaze comprising an amount of water, a reducing sugar and a hydrophilic colloid. These dough products are said to result in a finished product with an increased horizontal dimension over that which would be expected.

WO 98/30105 is concerned with unbaked dough products which are coated with a glaze comprising an amount of water, oil and hydrophilic colloid. The products of this document, when baked, are said to mimic the frying step additionally used in the production of certain dough products.

EP 0477832 is concerned with a browning agent which produces a brown surface on food products having a dough crust when heated in a microwave oven. The browning composition is produced by spray drying and aqueous solution containing a reducing sugar and milk protein.

WO 94/00996 is concerned with ready-to-use glazing agents which are fat-in-water emulsions comprising a liquid vegetable oil casein or one of its salts, an emulsifier and a composition which gives a browning upon heating. These glazing agents are said to have good spreadability and keepability.

WO 01/19203 relates to an icing composition which comprises a gelling agent and a low solubility sugar. This icing is said to have improved heat stability when the food product is reheated after freezing.

HU19950003271 relates to an icing and decorating composition which contains rancidity fat free fat, hard white fat, glucose syrup, flavouring, citric acid and optionally colouring. The product is formed by mixing the ingredients in a confectionary kneader and is said to have a snow-white colour, long shelf life and to not become brittle.

JP19830022588 relates to a coating agent containing oil and fat, sugar and an emulsifier. The ingredients are mixed together to produce a powdery coating agent which is said not to be hygroscopic and not humidified during storage.

EP 1002466 relates to a sugar-free cream icing formed from erythritol, a bulking agent, an emulsifier and an intensity sweetener. The texture and shelf life properties of such icing are said to be comparable to those of a conventional sucrose based cream icing.

The present invention relates to a dough product which comprises a dough mixture, part of the outer surface of which has been coated with a pre-glaze composition which is in the form of a powder or granules, wherein said dough mixture is frozen and wherein the pre-glaze composition is applied after freezing the dough mixture.

The present invention also relates to a process of preparing a dough product which process comprises a the formation of dough mixture, freezing the dough mixture and coating part of the outer surface of the dough mixture with a pre-glaze composition which is in the form of a powder or granules and wherein the pre-glaze composition is applied after freezing the dough mixture.

The present invention clearly provides an advantage over the prior art since the products and processes described herein provide a means for producing goods which, when baked, have an appearance which could only previously be achieved by applying a glaze to a baked product. This has advantages over methods used previously since the pre-glaze composition may be applied to the dough mixture in a controlled manner which ensures a uniform and shiny appearance of the eventual product, and, furthermore, the present invention also negates the need to apply a glaze to the product after baking. Since the application of a glaze has previously involved the use of brushes and glazing tools which may be dirty, the present invention is more hygienic.

The pre-glaze composition is in the form of a solid or granules and is preferably applied onto the dough mixture by dusting or sprinkling. The pre-glaze composition is preferably applied directly onto the dough mixture. The procedures for dusting or sprinkling the pre-glaze composition onto the dough mixture may be performed in a mechanised manner.

In one embodiment, the pre-glaze composition comprises mainly a complex sugar. Such a complex sugar may be
a multidextrose or polydextrose or, alternatively, may be
a mixture of sugar, glucose syrup and modified starch.

In an additional embodiment, when the pre-glaze composition comprises such a complex sugar, it further
comprises a monosaccharide, disaccharide and/or polysaccharide.

In a further embodiment, when the complex sugar is a multidextrose or polydextrose, the pre-glaze composition further comprises glucose and/or sorbitol.

The pre-glaze composition typically comprises at least 60% complex sugars, preferably at least 70% complex sugars, more preferably at least 80% and most preferably at least 90%. When the pre-glaze composition is a sugar, such percentages refer to the dry weight of the composition.

The pre-glaze composition typically comprises at least 60% of a multi dextrose or polydextrose, preferably at least 70% and more preferably at least 80%. Alternatively, the pre-glaze composition may comprise a combination of sugar, glucose syrup and modified starch. The combination of sugar, glucose syrup and modified starch typically comprises at least 60% of the pre-glaze composition, preferably at least 70% and more preferably at least 80%.

The said pre-glaze compositions may also comprise monosaccharides, disaccharides or polysaccharides.

The pre-glaze composition may comprise any sugars, which may include monosaccharides such as fructose, dextrose, glucose and galactose, disaccharides such as sucrose, lactose and maltose, sugar alcohols such as sorbitol, mannitol, xylitol, maltitol and lactitol, cyclic oligosaccharides such as cyclodextrin and cyclofructin and polysaccharides such as polydextrose. Typically the composition will comprise a mixture comprising polydextrose and lactose or a mixture comprising polydextrose and sorbitol. If a mixture of polydextrose and sorbitol is employed then the said mixture typically comprises from 70 to 95% polydextrose, preferably at least 80% and more preferably at least 90%, the mixture typically comprises from 0.5 to 3% sorbitol, preferably not more that 2.5% and more preferably not more than 2%, said mixture may also comprise up to 4% glucose.

In one embodiment, the pre-glaze composition comprises a sugar alcohol. Preferably, the sugar alcohol is lactitol.

The pre-glaze composition may also comprise a variety of other ingredients which may be added to enhance the appearance or taste of the final baked product, such ingredients may include dried fruit such as raisins, sultanas and apple, fresh fruits such as orange, pear and apple, freeze-dried fruit such as raspberries, nuts such as hazelnuts, pecan nuts and almonds, chopped nuts, sliced nuts, herbs such as basil or rosemary, spices such as cinnamon or nutmeg, flavouring ingredients such as chocolate or toffee, colouring ingredients, additives or preservatives. These ingredients may be applied to the surface of the unbaked dough mixture either before or after the application of the pre-glaze composition, or may be mixed with the pre-glaze composition such that the different components are applied simultaneously.

A further advantageous aspect of this invention is that the application of the pre-glaze composition to part of the surface of the dough mixture may provide an adhesive effect with regard to the addition of other ingredients. This clearly provides an advantage from a production point of view and provides a further advantage in that the product will be more likely to retain its manufactured appearance during transportation.

Another advantageous aspect of this invention is that, after baking, the pre-glaze composition forms a shiny shell which provides a light crunchy texture to the pastry. This shell may impart some non-stick properties to the exterior of the baked goods. Further, especially if toppings have been applied to the product, the shell can assist in holding the product together. Accordingly, the shell may reduce the risk of damage to the product, in particular during transportation The shell can also act to protect the product from the environment and to reduce staling. The dough product is generally baked in an oven.

The present invention also provides a product according to the present invention which is a bake-off foodstuff.

In one embodiment, the dough
mixture used in the present invention is raw croissant, Danish or puff pastry dough.

In a further embodiment, the dough mixture used in the present invention is raw bread dough.

Preferably, the dough mixture is part-baked prior to freezing.

Also provided is a process of the present invention wherein the coating step comprises sprinkling the granules or dusting the powder.

Further provided is a process of the invention wherein the dough mixture is part-baked prior to freezing.

Also provided is a process of the invention which further comprises baking the dough product in an oven.

The frozen dough product of the present invention may be baked directly from frozen or may be defrosted prior to baking.

In particular the present invention relates to pastries. By the term dough mixture is meant raw croissant, Danish or puff pastry dough or raw bread dough or the like. In particular the present invention relates to unbaked doughs which are frozen at the point of manufacture and are baked at the point of sale. In this situation, the point of manufacture and the point of sale may be same or may be different.

### Reference Examples

An apricot filled unbaked Danish pastry was dusted with a pre-glaze composition prior to freezing. The pre-glaze composition comprised a mixture of a polydextrose, sorbitol and glucose. The relative amounts of each components in the pre-glaze composition were at least 90% polydextrose, less than 2% sorbitol and less than 4% glucose. The frozen pastry was then baked in an oven at around 190°C for around 18 to 20 minutes. After baking the appearance of the Danish pastries were compared to Danish pastries prepared in an identical manner but which were, however, not pre-glazed.

The pre-glazed pastries had a shiny appearance whilst the non pre-glazed pastries appeared dull.

A similar test was performed by comparing the appearance cherry and almond pastries, however, in this case the pre-glaze comprised a mixture of polydextrose and lactose. In this case the pre-glazed pastries were more shiny and had a more caramelised appearance when compared to the non pre-glazed pastries.

## Claims

1. A dough product which comprises a dough mixture, part of the outer surface of which has been coated with a pre-glaze composition which is in the form of a powder or granules, wherein said dough mixture is frozen and wherein the pre-glaze composition is applied after freezing the dough mixture.

2. A product according to claim 1 wherein the pre-glaze composition comprises mainly a complex sugar.

3. A product according to claim 2 wherein the complex sugar is a multidextrose or polydextrose.

4. A product according to claim 2 wherein the complex sugar comprises a mixture of sugar, glucose syrup and modified starch.

5. A product according to claim 3 or claim 4 wherein the pre-glaze composition further comprises a monosaccharide, disaccharide and/or polysaccharide.

6. A product according to claim 3 wherein the pre-glaze composition further comprises glucose and/or sorbitol.

7. A product according to claim 1 wherein the pre-glaze composition comprises a sugar alcohol.

8. A product according to claim 7 wherein the sugar alcohol is lactitol.

9. A product according to any one of claims 1 to 8 which is a bake-off foodstuff

10. A product according to any one of claims 1 to 9 wherein the dough mixture is raw croissant, Danish or puff pastry dough.

11. A product according to any one of claims 1 to 9 wherein the dough mixture is raw bread dough.

12. A product according to any one of claims 1 to 11 wherein the dough mixture is part-baked prior to freezing.

13. A process of preparing a dough product which process comprises a the formation of dough mixture, freezing the dough mixture and coating part of the outer surface of the dough mixture with a pre-glaze composition which is in the form of a powder or granules and wherein the pre-glaze composition is applied after freezing the dough mixture.

14. A process according to claim 13 wherein the pre-glaze composition is as defined in any one of claims 2 to 8.

15. A process according to either claim 13 or claim 14 wherein the coating step comprises sprinkling the granules or dusting the powder.

16. A process according to any one of claims 13 to 15 wherein the dough mixture is part-baked prior to freezing.

17. A process according to any one of claims 13 to 16 which further comprises baking the dough product in an oven.

18. A process according to any one of claims 13 to 17 wherein the dough mixture is as defined in either claim 10 or claim 11.

## Patentansprüche

1. Teigprodukt, das eine Teigmischung umfasst, wobei ein Teil der Außenoberfläche desselben mit einer Vorglasur-Zusammensetzung beschichtet worden ist, welche in Form eines Pulvers oder in Form von Granalien vorliegt, wobei die Teigmischung gefroren ist und wobei die Vorglasur-Zusammensetzung nach dem Einfrieren der Teigmischung aufgebracht wird.

2. Produkt nach Anspruch 1, wobei die Vorglasur-Zusammensetzung hauptsächlich einen komplexen Zucker umfasst.

3. Produkt nach Anspruch 2, wobei der komplexe Zucker eine Multidextrose oder Polydextrose ist.

4. Produkt nach Anspruch 2, wobei der komplexe Zucker eine Mischung aus Zucker, Glukosesirup und modifizierter Stärke umfasst.

5. Produkt nach Anspruch 3 oder Anspruch 4, wobei die Vorglasur-Zusammensetzung ferner ein Monosaccharid, Disaccharid und/oder Polysaccharid umfasst.

6. Produkt nach Anspruch 3, wobei die Vorglasur-Zusammensetzung ferner Glukose und/oder Sorbitol umfasst.

7. Produkt nach Anspruch 1, wobei die Vorglasur-Zusammensetzung einen Zuckeralkohol umfasst.

8. Produkt nach Anspruch 7, wobei der Zuckeralkohol Lactitol ist.

9. Produkt nach einem der Ansprüche 1 bis 8, das ein Aufbacknahrungsmittel ist.

10. Produkt nach einem der Ansprüche 1 bis 9, wobei die Teigmischung ein Croissant-, Plundergebäck- oder Blätterteig-Rohteig ist.

11. Produkt nach einem der Ansprüche 1 bis 9, wobei die Teigmischung ein Brot-Rohteig ist.

12. Produkt nach einem der Ansprüche 1 bis 11, wobei die Teigmischung vor dem Einfrieren teilweise gebacken wird.

13. Verfahren zum Herstellen eines Teigprodukts, wobei das Verfahren die Bildung einer Teigmischung, das Einfrieren der Teigmischung und das Beschichten eines Teils der Aussenoberfläche der Teigmischung mit einer Vorglasur-Zusammensetzung, die in Form eines Pulvers oder in Form von Granalien vorliegt, umfasst und wobei die Vorglasur-Zusammensetzung nach dem Einfrieren der Teigmischung aufgebracht wird.

14. Verfahren nach Anspruch 13, wobei die Vorglasur-Zusammensetzung wie in einem der Ansprüche 2 bis 8 definiert ist.

15. Verfahren nach Anspruch 13 oder Anspruch 14, wobei der Beschichtungsschritt ein Berieseln der Granalien oder ein Bestäuben des Pulvers umfasst.

16. Verfahren nach einem der Ansprüche 13 bis 15, wobei die Teigmischung vor dem Einfrieren teilweise gebacken wird.

17. Verfahren nach einem der Ansprüche 13 bis 16, das ferner das Backen des Teigprodukts in einem Ofen umfasst.

18. Verfahren nach einem der Ansprüche 13 bis 17, wobei die Teigmischung wie in Anspruch 10 oder Anspruch 11 definiert ist.

## Revendications

1. Produit de type pâte qui comprend un mélange de pâte dont une partie de la surface externe a été revêtue d'une composition avant glaçage qui se présente sous la forme d'une poudre ou de granules, où ledit mélange de pâte est congelé et où la composition avant glaçage est appliquée après congélation du mélange de pâte.

2. Produit selon la revendication 1, où la composition avant glaçage comprend essentiellement un sucre complexe.

3. Produit selon la revendication 2, où le sucre complexe est un multidextrose ou polydextrose.

4. Produit selon la revendication 2, où le sucre complexe comprend un mélange de sucre, de sirop de glucose et d'amidon modifié.

5. Produit selon la revendication 3 ou la revendication 4, où la composition avant glaçage comprend en outre un monosaccharide, un disaccharide et/ou un polysaccharide.

6. Produit selon la revendication 3, où la composition avant glaçage comprend en outre du glucose et/ou du sorbitol.

7. Produit selon la revendication 1, où la composition avant glaçage comprend un alcool de sucre.

8. Produit selon la revendication 7, où l'alcool de sucre est le lactitol.

9. Produit selon l'une quelconque des revendications 1 à 8 qui est un aliment à cuisson différée.

10. Produit selon l'une quelconque des revendications 1 à 9, où le mélange de pâte est une pâte de croissant, de viennoiserie ou de pâte feuilletée crues.

11. Produit selon l'une quelconque des revendications 1 à 9, où le mélange de pâte est une pâte à pain crue.

12. Produit selon l'une quelconque des revendications 1 à 11, où le mélange de pâte est partiellement cuit avant la congélation.

13. Procédé de préparation d'un produit de type pâte, lequel procédé comprend la formation d'un mélange de pâte, la congélation du mélange de pâte et le revêtement d'une partie de la surface externe du mélange de pâte par une composition avant glaçage qui se présente sous la forme d'une poudre ou de granules et où la composition avant glaçage est appliquée après congélation du mélange de pâte.

14. Procédé selon la revendication 13, où la composition avant glaçage est telle que définie dans l'une quelconque des revendications 2 à 8.

15. Procédé selon la revendication 13 ou la revendication 14, où l'étape de revêtement comprend l'arrosage de la pâte par les granules ou son saupoudrage par la poudre.

16. Procédé selon l'une quelconque des revendications 13 à 15, où le mélange de pâte est cuit partiellement avant la congélation.

17. Procédé selon l'une quelconque des revendications 13 à 16, lequel comprend en outre la cuisson du produit de type pâte.

18. Procédé selon l'une quelconque des revendications 13 à 17, où le mélange de pâte est tel que défini dans la revendication 10 ou la revendication 11.
